# EUROPEAN PATENT APPLICATION

(11) **EP 4 589 824 A1**
(43) Date of publication of application: **23.07.2025**
(21) Application number: 23865064.2
(22) Date of filing: 18.07.2023
(51) Int. Cl.: H02K 5/22, H02K 5/08, H02K 11/30

(54) **MOTOR**

(30) Priority: 14.09.2022 JP 2022145895
(71) Applicant: Minebea Mitsumi Inc., Kitasaku-gun, Nagano 3890293 (JP)
(72) Inventor: MINEMATSU, Yasuhiro, Kitasaku-gun, Nagano 389-0293 (JP)
(74) Representative: Winter, Brandl - Partnerschaft mbB
(86) International application number: PCT/JP2023/026263
(87) International publication number: WO 2024/057702

(57) **Abstract**

An object is to provide an appropriately molded motor. A motor (1) includes a stator (20), a substrate (30) supported by the stator (20), and a resin member (50) covering the stator (20), the substrate (30) includes, in an axial direction, a first surface (30F) opposing the stator (20) and a second surface (30S) at an opposite side from the first surface (30F), the first surface (30F) of the substrate (30) is in contact with the resin member (50), the second surface (30S) of the substrate (30) includes an inner peripheral part (30i), an outer peripheral part (30o), and an intermediate part (30m) located between the inner peripheral part (30i) and the outer peripheral part (30o), the intermediate part (30m) is provided with at least one pad (40) having conductivity and is formed with a recessed part (45) surrounding the pad (40), and an end part of the recessed part (45) in a radial direction is formed at an outer side (d) in the radial direction of the inner peripheral part (30i) and at an inner side (c) in the radial direction of the outer peripheral part (30o).

## Description

### Technical Field

The present invention relates to a motor.

### Background Art

A motor with a stator, a substrate supplying electric power to the stator, and the like molded is known (for example, see Patent Document 1).

### Citation List

### Patent Literature

Patent Document 1: WO 2019/039204

### Summary of Invention

### Technical Problem

In the motor described in Patent Document 1, an appropriately molded motor is required.

Thus, one object of the present invention is to provide an appropriately molded motor.

### Solution to Problem

A motor of the present invention includes a stator, a substrate supported by the stator, and a resin member covering the stator, the substrate includes, in an axial direction, a first surface opposing the stator and a second surface at an opposite side from the first surface, the first surface of the substrate is in contact with the resin member, the second surface of the substrate includes an inner peripheral part, an outer peripheral part, and an intermediate part located between the inner peripheral part and the outer peripheral part, the intermediate part is provided with at least one pad having conductivity and is formed with a recessed part surrounding the pad, and an end part of the recessed part in a radial direction is formed at an outer side of the inner peripheral part in the radial direction and at an inner side of the outer peripheral part in the radial direction.

Such a motor may further include at least one of the following configurations.

The recessed part may be formed in a polygonal shape or a closed curved shape, and the pad may be provided in the polygonal shape or the closed curved shape. The recessed part may be formed only at the intermediate part. In addition, three pads including the pad may be provided, three recessed parts including the recessed part may be provided, each of the three pads may correspond to respective one of a U-phase, a V-phase, and a W-phase, and each of the three recessed parts may surround respective one of the three pads. The substrate may be formed by alternately stacking a plurality of conductor layers and a plurality of insulator layers, the outer peripheral part of the substrate may be provided with a connection part electrically connected to the stator, the pad may be provided at a first layer of the conductor layers located at an end of the substrate in the axial direction, and the pad and the connection part may be electrically connected by other layers of the conductor layers excluding the first layer of the conductor layers. In that case, the recessed part may penetrate through the first layer of the conductor layers in the axial direction. On the substrate, an annular part may be provided at each of the outer peripheral part and the inner peripheral part, and an end part of the recessed part in the radial direction may be provided at a side closer to the intermediate part than each annular part.

### Brief Description of Drawings

FIG. 1 is a perspective view illustrating a motor in an embodiment of the present invention.
FIG. 2 is a perspective view illustrating a stator assembly of the motor illustrated in FIG. 1.
FIG. 3 is a plan view of the stator assembly illustrated in FIG. 2 as viewed from one side in an axial direction.
FIG. 4 is a cross-sectional view in the axial direction of the stator assembly illustrated in FIG. 3.
FIG. 5 is a perspective view illustrating the stator assembly illustrated in FIG. 2 with a resin member removed.
FIG. 6 is a perspective view separately illustrating a stator and a substrate in the stator assembly illustrated in FIG. 5.
FIG. 7 is a view schematically illustrating a part of a cross-sectional view taken along the line VII-VII of the substrate illustrated in FIG. 6.
FIG. 8 is a view for explaining a partial process of a manufacturing process of the assembly illustrated in FIG. 2.

### Description of Embodiments

An embodiment for implementing a motor according to the present invention will be described below together with the accompanying drawings. The embodiment described below is intended to facilitate the understanding of the present invention and is not intended to be construed as limiting the present invention. The present invention can be modified and improved from the following embodiment without departing from the gist of the present invention. In addition, in the accompanying drawings, for ease of understanding, dimensions of respective members may be exaggerated or reduced, or hatching may be omitted.

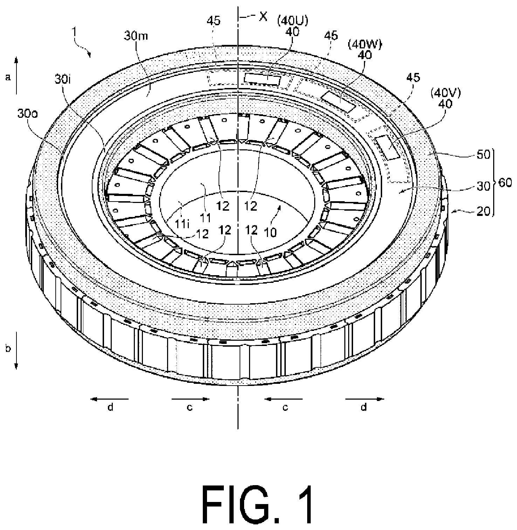

FIG. 1 is a perspective view illustrating a motor according to an embodiment. As illustrated in FIG. 1, the motor 1 includes a rotor 10 and a stator assembly 60 concentrically disposed with respect to a central axis X. The type of the motor 1 is not particularly limited and, in the present embodiment, the motor 1 is an AC motor, and more specifically, is configured as a two-pole three-phase induction motor. Each of the rotor 10 and the stator assembly 60 is formed in a cylindrical shape having a thickness corresponding to a length in the direction of the central axis X (hereinafter simply referred to as "axial direction"). FIG. 1 is a perspective view of the motor 1 as viewed from an a-side in the axial direction. The opposite side from the a-side in the axial direction is referred to as a b-side. When a direction orthogonal to the axial direction is defined as a radial direction, in the present embodiment, each of the rotor 10 and the stator assembly 60 is formed in a thin shape having a length in the radial direction (i.e., an outer diameter) larger than the thickness in the axial direction. In the present embodiment, the thickness of the rotor 10 is smaller than the thickness of the stator assembly 60. In the radial direction, a side closer to the central axis X is referred to as an inner side c, and a side farther from the central axis X is referred to as an outer side d.

For example, the stator assembly 60 may be fixed inside a housing body (not illustrated), and the rotor 10 may be supported inside the housing body so as to be rotatable with respect to the housing body and the stator assembly 60.

The rotor 10 includes a rotor iron core 11 centered on the central axis X and having a cylindrical shape, and a plurality of magnets 12 radially disposed in the rotor iron core 11 and supported by the rotor iron core 11. In the present embodiment, each of the magnets 12 has a rectangular shape when viewed from the axial direction and extends substantially parallel to each other. The extending direction of each of the magnets 12 may be parallel to the axial direction or may be inclined with respect to the axial direction. Although not particularly limited, the rotor iron core 11 may be made of stacked silicon steel sheets. A rotational shaft (not illustrated) may be attached to an inner peripheral surface 11i of the rotor iron core 11 by, for example, press-fitting, and the rotational shaft may protrude to the outside of the housing body.

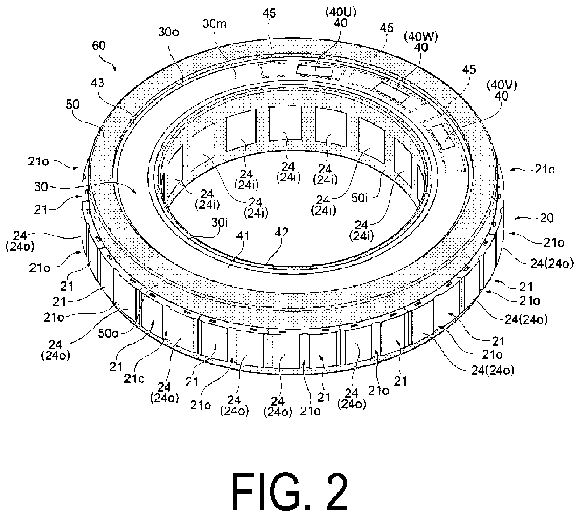

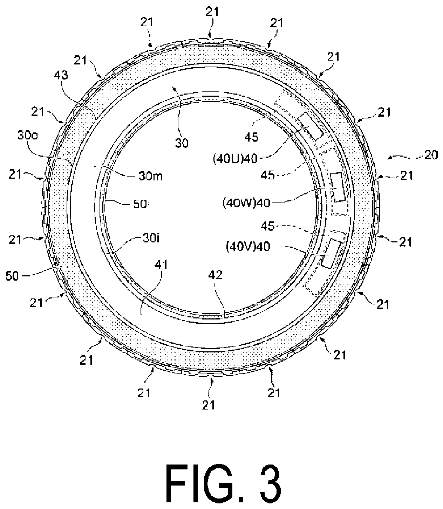

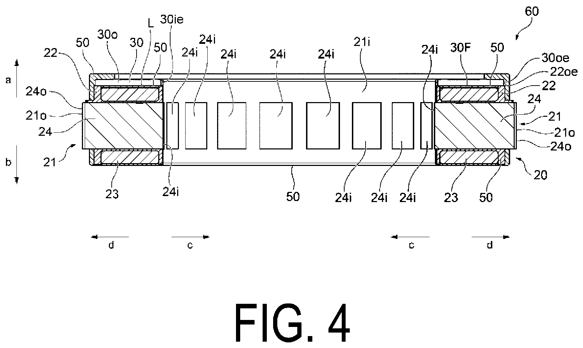

Next, the stator assembly 60 will be described. FIG. 2 is a perspective view of the stator assembly 60 as viewed from the a-side in the axial direction, FIG. 3 is a plan view of the stator assembly 60 as viewed from the a-side in the axial direction, and FIG. 4 is a cross-sectional view of the stator assembly 60 in the axial direction. As illustrated in FIG. 2 to FIG. 4, the stator assembly 60 includes a stator 20, a substrate 30, and a resin member 50. The resin member 50 partially covers the stator 20 and the substrate 30. This point will be described again below.

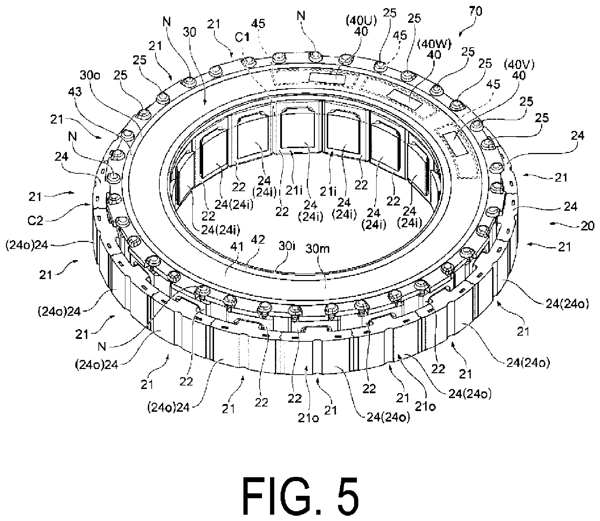

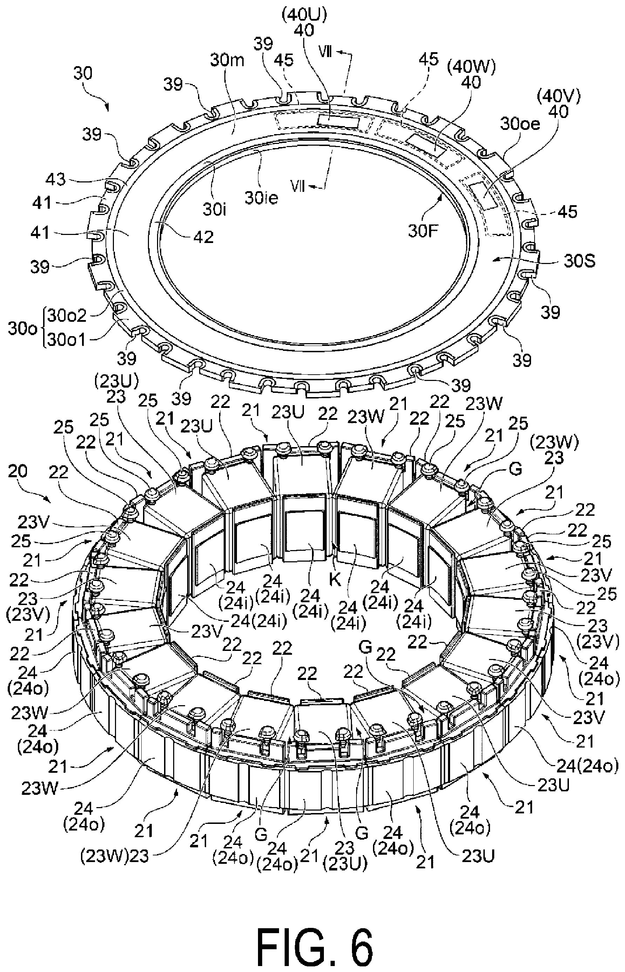

FIG. 5 and FIG. 6 are views illustrating the stator assembly 60 with the resin member 50 removed. That is, FIG. 5 is a perspective view of the stator 20 and the substrate 30 as viewed from the a-side in the axial direction, and FIG. 6 is a view illustrating the stator 20 and the substrate 30 separated from each other.

As illustrated in FIG. 5 and FIG. 6, the stator 20 is formed in a thin cylindrical shape centered on the central axis X. In the present embodiment, the stator 20 is configured as an assembly of a plurality of stator constituent bodies 21 arranged in a ring shape along a circumferential direction. The number of the stator constituent bodies 21 is not particularly limited, but is eighteen in the present embodiment. The respective stator constituent bodies 21 have the same configuration except for coil winding directions. As illustrated in FIG. 4 to FIG. 6, each of the plurality of stator constituent bodies 21 includes an iron core 24, an insulator 22, and a coil 23. The iron core 24 may be made of, for example, stacked silicon steel sheets. Most part of the iron core 24 is covered and insulated by the insulator 22. On the other hand, an inner peripheral surface 24i and an outer peripheral surface 24o of the iron core 24 are exposed from the insulator 22. The inner peripheral surface 24i is a surface at the inner side c of the iron core 24 in the radial direction, and the outer peripheral surface 24o is a surface at the outer side d in the radial direction. The coil 23 is wound around the iron core 24 via the insulator 22. When viewed from the a-side in the axial direction, the inner peripheral surface 24i of each of the plurality of stator constituent bodies 21 is substantially disposed on a first circle C1 centered on the central axis X, and the outer peripheral surface 24o of each of the plurality of stator constituent bodies 21 is substantially disposed on a second circle C2 centered on the central axis X having a larger diameter than the first circle C1. Two stator constituent bodies 21 adjacent to each other in the circumferential direction are disposed with inner peripheral parts 21i being in contact with each other and outer peripheral parts 21o being in contact with each other in the circumferential direction. Thus, a gap G is formed between parts other than the inner peripheral parts 21i and the outer peripheral parts 21o of the respective stator constituent bodies 21 adjacent to each other in the circumferential direction. The inner peripheral part 21i includes the inner peripheral surface 24i, and the outer peripheral part 21o includes the outer peripheral surface 24o.

A terminal pin 25 is provided at each of end parts at the outer side d in the radial direction out of both edge parts of the coil 23 in the circumferential direction. The terminal pin 25 extends from the coil 23 toward the a-side substantially parallel to the axial direction. A starting end (winding start) of the coil 23 is wound around one of the two terminal pins 25, 25, and a terminal end (winding end) of the coil 23 is wound around the other. Current is supplied to the coil 23 via these terminal pins 25, 25.

As illustrated in FIG. 4 to FIG. 6, the substrate 30 is a plate-like member having a ring shape centered on the central axis X. The substrate 30 is disposed at the a-side of the stator 20 in the axial direction. The inner diameter of the substrate 30 (i.e., the diameter of an inner peripheral part 30ie of the substrate 30) is substantially the same as the diameter of the first circle C1 of the stator 20. The outer diameter of the substrate 30 (i.e., the diameter of an outer peripheral part 30oe of the substrate 30) is smaller than the diameter of the second circle C2 of the stator 20, and the position of the outer peripheral part 30oe of the substrate 30 is substantially coincident with the position of an outer peripheral edge 22oe of the insulator 22 in the radial direction. At the outer peripheral part 30oe of the substrate 30, notches 39 having a semicircular shape and having substantially the same diameter are formed at substantially equal intervals over the entire circumferential direction. Each of the notches 39 is formed so as to correspond to each of the plurality of terminal pins 25, and is formed so that each of the terminal pins 25 can be fitted. Thus, by fitting each of the terminal pins 25 into each of the notches 39, the substrate 30 is supported by the stator 20, and the plurality of stator constituent bodies 21 are positioned and fixed to each other via the substrate 30. As described above, in the motor 1, the plurality of terminal pins 25 is provided at the outer peripheral part 30oe of the substrate 30. When viewed from the a-side in the axial direction, the substrate 30 covers the most part of the stator 20.

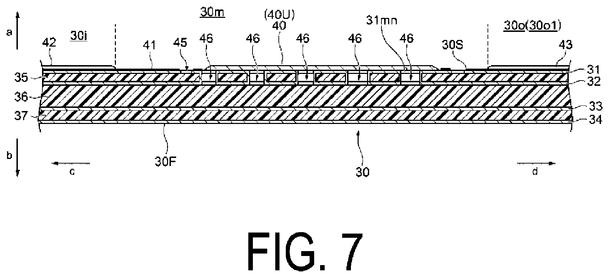

FIG. 7 is a cross-sectional view taken along the line VII-VII illustrated in FIG. 6, illustrating a part of the substrate 30, that is, a cross-sectional view in the axial direction illustrating a part of the substrate 30. As illustrated in FIG. 7, the substrate 30 includes a first surface 30F at the b-side and a second surface 30S at the a-side in the axial direction. As illustrated in FIG. 4, the first surface 30F is opposed to the stator 20 in the axial direction, and a clearance L having a minute size is formed between the first surface 30F and the stator 20. In the present embodiment, the clearance L is filled with the resin member 50.

As illustrated in FIG. 6 and FIG. 7, the second surface 30S includes the inner peripheral part 30i located at the inner side c in the radial direction, the outer peripheral part 30o located at the outer side d in the radial direction, and an intermediate part 30m located between the inner peripheral part 30i and the outer peripheral part 30o. The inner peripheral part 30i includes an end part of the inner peripheral part 30ie at the a-side. The outer peripheral part 30o includes an end part of the outer peripheral part 30oe at the a-side. The outer peripheral part 30o includes a first region 30o1 located at the outer side d including the end part of the outer peripheral part 30oe at the a-side and a second region 30o2 located at the inner side c of the first region 30o1. A first material 41 having an insulation property is applied to the second surface 30S with a partial exception. In addition, a second material 42 is annularly applied on the first material 41 at the inner peripheral part 30i of the second surface 30S, and the second material 42 forms an annular part. In addition, a third material 43 is annularly applied on the first material 41 at the second region 30o2 of the outer peripheral part 30o, and the third material 43 forms an annular part. All of the first material 41, the second material 42, and the third material 43 may be made of the same material (for example, insulating ink), two of them may be made of the same material, or all of them may be made of different materials. When the first material 41, the second material 42, and the third material 43 are inks, they may be applied onto the second surface 30S by screen-printing.

As illustrated in FIG. 6 and FIG. 7, the intermediate part 30m of the second surface 30S includes At least one part (in the present embodiment, three parts) 31mn without the first material 41 applied. In the present embodiment, a pad 40 having conductivity is stacked at each of the three parts 31mn without the first material 41 applied. When viewed from the a-side in the axial direction, the three pads 40 substantially entirely cover the parts 31mn without the first material 41 applied, respectively. Three recessed parts 45 are formed at the intermediate part 30m so as to correspond one-by-one to the respective three pads. That is, one recessed part 45 surrounds corresponding one pad 40. Each of the three recessed parts 45 is formed only at the intermediate part 30m, and an end part of each of the recessed parts 45 in the radial direction is formed at the outer side d of the inner peripheral part 30i in the radial direction and at the inner side c of the outer peripheral part 30o in the radial direction. In addition, each of the three recessed parts 45 is provided closer to the intermediate part 30m than each of the annular part formed by the second material 42 and the annular part formed by the third material 43. In the present embodiment, each of the three recessed parts 45 is substantially rectangular when viewed from the a-side. The shape of the recessed part 45 is not particularly limited, but is preferably a polygonal shape or a closed curved shape when viewed from the a-side.

As illustrated in FIG. 7, in the present embodiment, the substrate 30 is formed by alternately stacking a plurality of conductor layers and a plurality of insulator layers. The conductor layers may be made of, for example, conductors such as copper, and the insulator layers may be made of, for example, insulating resin. Specifically, the substrate 30 is formed by stacking a first conductor layer 31, a first insulator layer 35, a second conductor layer 32, a second insulator layer 36, a third conductor layer 33, a third insulator layer 37, and a fourth conductor layer 34 in this order from the a-side to the b-side in the axial direction. That is, the first conductor layer 31 is a conductor layer of a first layer located at one end (the a-side) in the axial direction, and the second surface 30S of the substrate 30 is a surface of the first conductor layer 31 at the a-side. The fourth conductor layer 34 is a conductor layer of a fourth layer located at the other end (the b-side) in the axial direction, and the first surface 30F is a surface of the fourth conductor layer 34 at the b-side.

In the present embodiment, in the region illustrated in FIG. 7, a plurality of through-holes 46 is provided at the part 31mn without the first material 41 applied (hereinafter referred to as "conductor-exposed part 31mn"), and the first conductor layer 31 and the second conductor layer 32 are electrically connected to each other via the through-holes 46. Thus, the current from the pad 40 provided at the region illustrated in FIG. 7 flows through the through-holes 46 via the conductor-exposed part 31mn and reaches the second conductor layer 32. In the present embodiment, a predetermined terminal pin 25 out of the plurality of terminal pins 25 is electrically connected to the second conductor layer 32 in the region illustrated in FIG. 7. That is, in the present embodiment, the predetermined terminal pin 25 and the pad 40 are electrically connected to each other in the second conductor layer 32. Thus, the current from the pad 40 flows through the coil 23 connected to the predetermined terminal pin 25 via the second conductor layer 32 excluding the first conductor layer 31. In a region different from the region illustrated in FIG. 7, for example, one terminal pin 25 of one coil 23 of any two coils 23 and one terminal pin 25 of the other coil may be electrically connected by the third conductor layer 33, and the other terminal pin 25 of the one coil 23 may be electrically connected to a region of the second conductor layer 32 electrically connected to the pad 40. In that case, the pad 40, the one terminal pin 25 of the one coil 23, and the one terminal pin 25 of the other coil 23 are electrically connected via the second conductor layer 32 and the third conductor layer 33. Thus, the current from the pad 40 flows through the two coils 23 via the second conductor layer 32 and the third conductor layer 33. In still another region, two coils 23 may be connected to each other by the fourth conductor layer 34. As described above, in the present embodiment, the plurality of coils 23 are electrically connected via the multiple conductor layers. That is, in the present embodiment, the terminal pins 25 (connection parts) electrically connected to the stator 20 are provided at the outer peripheral part 30o of the substrate 30, the pads 40 are provided at the first conductor layer 31 being the first layer located at an end of the substrate 30 in the axial direction, and the pads 40 and the terminal pins 25 (connection parts) are electrically connected by the conductor layers excluding the first conductor layer 31 being the first layer (the second conductor layer 32, the third conductor layer 33, and the fourth conductor layer 34).

Further, in the present embodiment, each of the three pads 40 corresponds to respective one of a U-phase, a V-phase, and a W-phase. Hereinafter, for convenience purpose, the pad 40 corresponding to the U-phase is referred to as a pad 40U, the pad 40 corresponding to the V-phase is referred to as a pad 40V, and the pad 40 corresponding to the W-phase is referred to as a pad 40W. As illustrated in FIG. 6, in the present embodiment, the pads 40U, 40W, and 40V are arranged in this order in a clockwise direction, and are collectively disposed in a region of approximately a quarter circle of the substrate 30. However, it is not essential to collectively dispose the pads 40U, 40W, and 40V as described above. For example, the pads 40U, 40W, and 40V may be disposed at equal intervals (intervals of 120°) in the circumferential direction.

As described above, the motor 1 includes the three pads 40 and the three recessed parts 45, each of the three pads 40 corresponds to respective one of the U-phase, the V-phase, and the W-phase, and each of the three recessed parts 45 surrounds respective one of the three pads 40.

In the present embodiment, the region illustrated in FIG. 7 is a region corresponding to the pad 40U. U-phase alternating current is supplied via the pad 40U to a first U-layer coil group including three coils 23U consecutively arranged in the circumferential direction and a second U-layer coil group including three coils 23U consecutively arranged in the circumferential direction and located at the opposite side from the first U-layer coil group with respect to the central axis X. W-phase alternating current is supplied via the pad 40W to a first W-layer coil group including three coils 23W consecutively arranged in the circumferential direction and a second W-layer coil group including three coils 23W consecutively arranged in the circumferential direction and located at the opposite side from the first W-layer coil group with respect to the central axis X. V-phase alternating current is supplied via the pad 40V to a first V-layer coil group including three coils 23V consecutively arranged in the circumferential direction and a second V-layer coil group including three coils 23V consecutively arranged in the circumferential direction and located at the opposite side from the first V-layer coil group with respect to the central axis X.

As illustrated in FIG. 7, in the present embodiment, the recessed parts 45 penetrate the first conductor layer 31 (i.e., the first layer of the conductor layers) in the axial direction. Thus, in the present embodiment, at the first conductor layer 31, the conductor-exposed part 31mn electrically connected to the pad 40U of the U-phase, the conductor-exposed part 31mn electrically connected to the pad 40W of the W-phase, and the conductor-exposed part 31mn electrically connected to the pad 40V of the V-phase are insulated from each other.

Next, the resin member 50 will be described. As the resin forming the resin member 50, thermosetting resin may be used, or thermoplastic resin may be used. The resin forming the resin member 50 may contain, for example, aluminum or silicon. The rigidity of the resin forming the resin member 50 is not particularly limited, but may be lower than the rigidity of the resin forming the insulator 22. Further, the resin member 50 may have excellent thermal conductivity and insulation property. The resin member 50 is provided by molding as will be described below.

As illustrated in FIG. 2 to FIG. 4, the resin member 50 has a substantially cylindrical shape centered on the central axis X as a central axis, and covers the stator 20 except for the inner peripheral surface 24i and the outer peripheral part 21o of each of the stator constituent bodies 21. That is, the resin member 50 covers both the a-side and the b-side of the stator 20 in the axial direction. In the present embodiment, at the inner side c of the stator 20, the inner peripheral surface 24i of each of the stator constituent bodies 21 is exposed from the resin member 50, and an inner peripheral surface 50i of the resin member 50 and the inner peripheral surface 24i of each of the stator constituent bodies 21 are substantially flush. Each of the inner peripheral surfaces 24i exposed is opposed to the outer peripheral surface of the rotor 10 (see FIG. 1). On the other hand, at the outer side d of the stator 20, the outer peripheral part 21o of each of the stator constituent bodies 21 protrudes from an outer peripheral surface 50o of the resin member 50 to the outer side d.

The resin member 50 entirely covers the first surface 30F at the b-side of the substrate 30, the inner peripheral part 30ie at the inner side c in the radial direction, and the outer peripheral part 30oe at the outer side d in the radial direction. That is, the first surface 30F is in contact with the resin member 50. The resin member 50 partially covers a part of the substrate 30 at the a-side in the axial direction. Specifically, the resin member 50 covers the first material 41 applied to the first region 30o1 of the outer peripheral part 30o in the second surface 30S of the substrate 30. However, the resin member 50, the resin member 50 does not cover the second region 30o2 (i.e., the third material 43) of the outer peripheral part 30o, the intermediate part 30m (i.e., the first material 41), and the inner peripheral part 30i (i.e., the second material 42) of the second surface 30S of the substrate 30. That is, in the motor 1, the resin member 50 is prevented from protruding to the inner side c from the annular part made of the third material 43 and to the outer side d from the annular part made of the second material 42. Further, the resin member 50 is prevented from protruding to the intermediate part 30m of the substrate 30 provided with the pads 40, the wiring connected to the pads 40, and the like. Since the protrusion is prevented in this way, the appearance is also excellent. As described above, in the motor 1, the resin member 50 is appropriately molded.

As described above, the motor 1 of the present embodiment includes the stator 20, the substrate 30 supported by the stator 20, and the resin member 50 covering the stator 20. In the axial direction, the substrate 30 includes the first surface 30F opposing the stator 20 and the second surface 30S at the opposite side from the first surface 30F, and the first surface 30F of the substrate 30 is in contact with the resin member 50. The second surface 30S of the substrate 30 includes the inner peripheral part 30i, the outer peripheral part 30o, and the intermediate part 30m located between the inner peripheral part 30i and the outer peripheral part 30o. At the intermediate part 30m, at least one pad 40 having conductivity is provided and the recessed part 45 surrounding the pad 40 is formed. The end part of the recessed part 45 in the radial direction is formed at the outer side d of the inner peripheral part 30i in the radial direction and at the inner side c of the outer peripheral part 30o in the radial direction.

Next, a manufacturing method for the motor 1 will be described.

First, as a first step, the recessed part 45 is formed at the intermediate part 30m of the second surface 30S of the substrate 30. Specifically, as illustrated in FIG. 6, the recessed part 45 surrounding the pad 40 is formed so as to correspond to each of the three pads 40. That is, three recessed parts 45 are formed at the substrate 30. At this time, each of the recessed parts 45 is formed only at the intermediate part 30m. That is, the recessed parts 45 are formed such that the end parts of the recessed parts 45 in the radial direction are located at the outer side d of the inner peripheral part 30i in the radial direction and at the inner side c of the outer peripheral part 30o in the radial direction. More specifically, each of the three recessed parts 45 is provided closer to the intermediate part 30m than each of the annular part formed by the second material 42 and the annular part formed by the third material 43.

Next, as a second step, as illustrated in FIG. 5, the stator 20 and the substrate 30 are fixed by fitting the plurality of terminal pins 25 of the stator 20 into the notches 39 formed at the outer peripheral part 30oe of the substrate 30, respectively. As a result, a substrate-mounted stator 70 is obtained. Note that the substrate 30 may be fixed to the stator 20 by providing a screw groove at an end part of the terminal pin 25 projecting from the notch 39 to the a-side and screwing a nut N to the end part of the terminal pin 25.

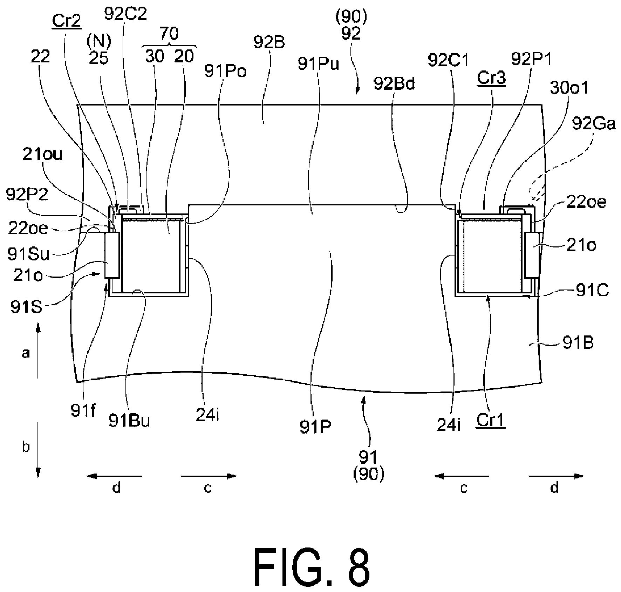

Next, a third step is performed. This step is a step of fitting the substrate-mounted stator 70 into a mold. As illustrated in FIG. 8, a mold 90 used in this step includes a first mold 91 and a second mold 92.

The first mold 91 includes a base part 91B, a projecting part 91P having a columnar shape and projecting from the base part 91B to the a-side, and a stepped part 91S projecting from the base part 91B to the a-side at a predetermined interval from the projecting part 91P to the outer side d in the radial direction. A flange surface 91f projecting to the inner side c is formed at a surface of the stepped part 91S at the inner side c. The diameter of the projecting part 91P is substantially the same as the diameter of the first circle C1 described above (see FIG. 5). In the first mold 91, a recessed part 91C having an annular shape when viewed from the a-side is formed by an outer peripheral surface 91Po of the projecting part 91P, an upper surface 91Bu of the base part 91B at the a-side, and an inner surface of the stepped part 91S at the inner side c.

The second mold 92 includes a base part 92B, a first projecting part 92P1 projecting from the base part 92B to the b-side and having an annular shape when viewed from the b-side, and a second projecting part 92P2 projecting to the b-side at a predetermined interval at the outer side d in the radial direction from the first projecting part 92P1 and having an annular shape when viewed from the b-side. The projecting length of the second projecting part 92P2 to the b-side is longer than the projecting length of the first projecting part 92P1 to the b-side. A first recessed part 92C1 having a circular shape when viewed from the b-side is formed at the second mold 92 by a lower surface 92Bd of the base part 92B at the b-side and an inner surface of the first projecting part 92P1 at the inner side c. The diameter of the first recessed part 92C1 (i.e., the inner diameter of the first projecting part 91P1) is substantially the same as the diameter of the projecting part 91P of the first mold 91. At the outer side d of the first recessed part 92C1 of the second mold 92, a second recessed part 92C2 having an annular shape when viewed from the b-side is formed by the lower surface 92Bd of the base part 92B, an outer surface of the first projecting part 92P1 at the outer side d, and an inner surface of the second projecting part 92P2 at the inner side c. A gate hole 92Ga for injecting the resin forming the resin member 50 is provided at a part of the region forming the second recessed part 92C2 of the lower surface 92Bd of the base part 92B, and the gate hole 92Ga communicates with the second recessed part 92C2.

In this step, first, the substrate-mounted stator 70 is disposed inside the recessed part 91C of the first mold 91. Accordingly, the inner peripheral surface 24i of each of the plurality of stator constituent bodies 21 is substantially entirely in contact with the outer peripheral surface 91Po of the projecting part 91P of the first mold 91. In addition, a part at the outer side d of the outer peripheral part 21o of each of the plurality of stator constituent bodies 21 is fitted to the flange surface 91f of the stepped part 91S and a part at the a-side of the flange surface 91f of a surface of the stepped part 91S at the c-side. As a result, an upper surface 21ou at the a-side of the outer peripheral part 21o of each of the plurality of stator constituent bodies 21 and an upper surface 91Su at the a-side of the stepped part 91S of the first mold 91 are in contact with each other in a substantially flush state without clearance, and a first clearance Cr1 is formed between the first mold 91 and the substrate-mounted stator 70 at the b-side of the flange surface 91f. Specifically, the first clearance Cr1 includes a clearance at the b-side of an end part at the b-side of the inner peripheral surface 24i at the c-side with respect to the substrate-mounted stator 70, a clearance at the b-side of the substrate-mounted stator 70 at the b-side with respect to the substrate-mounted stator 70, and a clearance at the b-side of the flange surface 91f at the d-side with respect to the substrate-mounted stator 70.

Next, in a state of making a surface at the b-side of the second mold 92 is opposed to a surface at the a-side of the first mold 91 and a surface at the a-side of the substrate-mounted stator 70 disposed inside the recessed part 91C of the first mold 91, the second mold 92 is disposed on the first mold 91. This state is illustrated in FIG. 8. Accordingly, an end part 91Pu at the a-side of the projecting part 91P of the first mold 91 is fitted into the first recessed part 92C1 of the second mold 92. In addition, a surface at the b-side of the first projecting part 92P1 of the second mold 92 is substantially entirely in contact with a region of a surface of the substrate 30 at the a-side excluding the first region 30o1. By disposing the second mold 92 in this manner, a second clearance Cr2 and a third clearance Cr3 are formed between the substrate-mounted stator 70 and the second mold 92. Specifically, the second clearance Cr2 includes a clearance located at the d-side with respect to the substrate-mounted stator 70 and a clearance located at the a-side with respect to the substrate-mounted stator 70. The third clearance Cr3 includes a clearance between the stator 20 and the substrate 30 and a clearance located at the c-side with respect to the substrate-mounted stator 70. In addition, in the state of FIG. 8 with the second mold 92 disposed, the first clearance Cr1, the second clearance Cr2, and the third clearance Cr3 communicate with each other via the above-described gaps G illustrated in FIG. 6, gaps K between the inner peripheral surfaces 24i of the adjacent stator constituent bodies 21, and the like.

Next, a fourth step is performed. This step is a step of injecting the resin (hereinafter referred to as "mold resin") for forming the resin member 50 into the mold 90 fitted with the substrate-mounted stator 70 to perform molding. Specifically, liquid mold resin is injected from the gate hole 92Ga formed at the second mold 92. Then, the liquid mold resin first flows into the second clearance Cr2, and then flows into the first clearance Cr1 and the third clearance Cr3 via the gaps G, the gaps K, and the like. Eventually, the first clearance Cr1, the second clearance Cr2, the third clearance Cr3, the gaps G, the gaps K, and the like are filled with the liquid mold resin, and then the liquid mold resin is cured. As a result, the resin member 50 is formed. That is, the stator assembly 60 illustrated in FIG. 2 to FIG. 4 is completed by this step.

In this step, as described above, the surface at the b-side of the first projecting part 92P1 of the second mold 92 is substantially entirely in contact with the region of the surface at the a-side of the substrate 30 excluding the first region 30o1. Thus, it is considered that the mold resin flowed into the second clearance Cr2 is less likely to enter the region at the inner side c of the second region 30o2 of the substrate 30. However, as described above, in the present embodiment, at the first conductor layer 31 of the substrate 30, recessed parts for insulating the conductor-exposed part 31mn electrically connected to the pad 40U, the conductor-exposed part 31mn electrically connected to the pad 40W, and the conductor-exposed part 31mn electrically connected to the pad 40V from each other. For example, when an end part of the recessed part at the outer side d in the radial direction is connected to the first region 30o1, there is a concern that the mold resin in the second clearance Cr2 may enter a region at the inner side c of the first region 30o1 of a surface of the substrate 30 at the a-side via the recessed part (see FIG. 4 and FIG. 8). In addition, for example, when an end part of the recessed part at the inner side c in the radial direction is connected to the inner peripheral part 30ie (FIG. 4 and FIG. 8) of the substrate 30, there is a concern that the mold resin in the third clearance Cr3 may enter the inner peripheral part 30i and a region at the outer side d of the inner peripheral part 30i of a surface of the substrate 30 at the a-side via the recessed part. However, according to the present embodiment, as described above, each of the three recessed parts 45 is formed only at the intermediate part 30m, and an end part of each of the recessed parts 45 in the radial direction is formed at the outer side d in the radial direction of the inner peripheral part 30i and at the inner side c in the radial direction of the outer peripheral part 30o. More specifically, each of the three recessed parts 45 is provided closer to the intermediate part 30m than each of the annular part formed by the second material 42 and the annular part formed by the third material 43. Thus, it is possible to prevent the mold resin from entering a part of the substrate 30 at the inner side c (such as the intermediate part 30m) via the recessed parts 45. Therefore, in the motor 1 completed through this step, as described above, the mold resin is prevented from protruding to the part of the substrate 30 at the inner side c, and the resin member 50 appropriately molded is provided.

The present invention has been described above with reference to the embodiment, but the present invention is not limited to the embodiment.

For example, in the above-described embodiment, an example of a two-pole three-phase induction motor has been described as an example, the present invention can be applied regardless of the types of motors, and can be applied to, for example, a four-pole three-phase induction motor, a single-phase AC motor, or an inner-rotor DC motor.

Furthermore, the recessed parts 45 may have shapes different from one another. Appropriate change may be made in accordance with the size and the arrangement position of each of the pads.

### Reference Signs List

1 Motor; 20 Stator; 21i Inner peripheral part; 21o Outer peripheral part; 30 Substrate; 30F First surface; 30i Inner peripheral part; 30m Intermediate part; 30o Outer peripheral part; 30S Second surface; 40 Pad; 45 Recessed part; 50 Resin member

## Claims

1. A motor comprising:
a stator;
a substrate supported by the stator; and
a resin member covering the stator,
the substrate including, in an axial direction, a first surface opposing the stator and a second surface at an opposite side from the first surface, wherein
the first surface of the substrate is in contact with the resin member,
the second surface of the substrate includes an inner peripheral part, an outer peripheral part, and an intermediate part located between the inner peripheral part and the outer peripheral part,
the intermediate part is provided with at least one pad having conductivity and formed with a recessed part surrounding the pad, and
an end part of the recessed part in a radial direction is formed at an outer side in the radial direction of the inner peripheral part and at an inner side in the radial direction of the outer peripheral part.

2. The motor according to claim 1, wherein
the recessed part is formed in a polygonal shape or a closed curved shape, and
the pad is provided in the polygonal shape or the closed curved shape.

3. The motor according to claim 1 or 2, wherein the recessed part is formed only at the intermediate part.

4. The motor according to claim 1, comprising:
three pads including the pad; and
three recessed parts including the recessed part, wherein
each of the three pads corresponds to one of a U-phase, a V-phase, and a W-phase, and
each of the three recessed parts surrounds one of the three pads.

5. The motor according to claim 1, wherein
the substrate is formed by alternately stacking a plurality of conductor layers and a plurality of insulator layers,
the outer peripheral part of the substrate is provided with a connection part electrically connected to the stator,
the pad is provided at a first layer of the conductor layers, the first layer being located at an end of the substrate in the axial direction, and
the pad and the connection part are electrically connected by other layers of the conductor layers excluding the first layer of the conductor layers.

6. The motor according to claim 5, wherein the recessed part penetrates through the first layer of the conductor layers in the axial direction.

7. The motor according to claim 1, wherein
on the substrate, an annular part is provided at each of the outer peripheral part and the inner peripheral part, and
an end part of the recessed part in the radial direction is provided at a side closer to the intermediate part than each annular part.
